# EUROPÄISCHE PATENTSCHRIFT

(11) **EP 1 453 406 B1**
(45) Veröffentlichungstag und Bekanntmachung des Hinweises auf die Patenterteilung: **01.08.2007**
(21) Anmeldenummer: 02776636.9
(22) Anmeldetag: 22.11.2002
(51) Int. Cl.: A47J 39/00

(54) **VORRICHTUNG ZUM TRANSPORTIEREN UND ZWISCHENLAGERN VON GEKOCHTEN SPEISEN UND TELLERGERICHTEN**
DEVICE FOR TRANSPORTING AND STORING COOKED FOOD AND ONE-COURSE MEALS
DISPOSITIF DE TRANSPORT ET D'ENTREPOSAGE DE PLATS CUISINES ET DE PLATS GARNIS

(30) Priorität: 23.11.2001 CH 216401
(43) Veröffentlichungstag der Anmeldung: 08.09.2004
(73) Patentinhaber: TECHNIKUS AG, 9490 Vaduz (LI)
(72) Erfinder: SCHELLENBERG, Walter, CH-8152 Glattbrugg (CH)
(74) Vertreter: Felber, Josef
(86) Internationale Anmeldenummer: PCT/CH2002/000635
(87) Internationale Veröffentlichungsnummer: WO 2003/043476

(56) Entgegenhaltungen:
- WO-A-98/07331
- US-A- 5 797 445
- US-A- 5 992 411
- US-B1- 6 344 630

## Beschreibung

Diese Erfindung betrifft eine Vorrichtung zum Transportieren und Zwischenlagern von bereits fast oder ganz gargekochten Speisen oder fertigen Tellergerichten, wie aus dem Patent US 5 797 445 bekannt. Die Verpflegung einer grossen Anzahl von Personen, sei dies in Hotel- und Restaurantbetrieben, in Heimen aller Art, aber auch in Militär- und Firmenkantinen sowie in Flugzeugen, in Eisenbahnzügen und auf Schiffen, ist zunehmend anspruchsvoller. Die Konsumenten wünschen sich nämlich mehr und mehr naturbelassene, schonungsvoli gekochte und fettarme Speisen, die zudem möglichst frisch sein sollen und erst noch am liebsten auf Porzellantellern und mit hochwertigem Besteck serviert werden sollen. Einheits-Essen, serviert auf billigen Einweg-Kunststoff-Tellern mit Einweg-Kunststoff-Besteck vermögen diesen Anforderungen nicht zu genügen. Nun können Küchenbetriebe, die ständig eine grosse Anzahl hochwertiger Tellermenüs oder Gerichte à la carte zubereiten, diese Anforderungen wohl erfüllen, allerdings, ist diese Aufgabe logistisch anspruchsvoll und es ist immer schwierig, dass alles zur richtigen Zeit bereit ist und die Speisen dem einzelnen Gast letztlich frisch und heiss serviert werden können. Je mehr Essensportionen rasch distributiert werden müssen, umso schwieriger ist die Abwicklung des Zubereitens der Essen auf den richtigen Zeitpunkt hin und auch des Servierens, wenn alle Bedienten heiss und frisch gekocht essen möchten. Gerade wenn grosse Bankette abgehalten werden, oder besonders viele Personen auf engem Raum hochwertig verpflegt werden sollen, stösst man mit den konventionellen Koch- und Warmhaltemethoden an Grenzen. Entweder leidet die Frische der Essensportionen, oder die Naturbelassenheit der Speisen, oder deren Verpackung entspricht nicht den gewünschten Qualitätsansprüchen. So werden zum Beispiel die Essensportionen für die Verpflegung in Flugzeugen in Form von Tellergerichten auf Kunststoff-Behältern mit Klarsicht-Deckeln oder abziehbaren Aluminium-Folien vorbereitet und tiefgekühlt. Die Essensportionen werden wegen dem grossen Energiebedarf noch vor dem Start des Flugzeuges auf 150°C erwärmt und dann kurz vor dem Servieren während des Fluges werden die Speisen im bordeigenen Heissluftherd auf kurzzeitig 250°C erhitzt. Der Dampf wird im Flugzeug mit Hilfe des in den Speisen enthaltenen Wassers erzeugt, was bewirkt, dass die Speisen oft über Gebühr ausgetrocknet werden. Diese Technologie und ihre technischen Einschränkungen beschränken auch die Auswahl der Menüs. Auf Langstreckenflügen werden jeweils die Essensportionen nicht nur für den Hin-, sondern auch für den Rückflug mitgeführt, wobei stets eine Sicherheitsreserve an verschiedenen Tellergerichten mitgenommen wird, weil die Zahl und Zusammensetzung der Passagiere auf dem Rückflug vor dem Hinflug noch nicht bekannt ist. Alle Speisen aber, die auf dem Rückflug nicht verzehrt werden, gelangen in den Schweinetrog. Es ist wegen ihrer mangelnden Frische grundsätzlich nicht möglich, sie für den menschlichen Verzehr weiterzuverwenden.

Nach dem sogenannten Cook and Chill-Verfahren werden in einer Produktionsküche für grosse Mengen von Essensportionen zunächst grössere Mengen an gleichen Speisen gekocht. Anschliessend werden die Speisen in Gastro-Normschalen portioniert und im Schockkühlschrank innert 90 Minuten von 170°C auf +3°C heruntergekühlt. Dies soll die Bildung von Bakterien verhindern. Die so zubereiteten Speisen sind gekühlt auf 1 °C bis 4°C bis zu fünf Tagen haltbar. Richtig aufbereitet sind sie vergleichbar mit frisch zubereiteten Gerichten.

Gemäss dem sogenannten Cuisson sous vide-Verfahren werden die gerüsteten Rohprodukte in speziellen Kochbeuteln vakuumiert und in diesen gegart. Durch dieses Verfahren bleiben sämtliche Aromastoffe erhalten. Es können keine Fremdstoffe eindringen. Auch hier werden die Speisen wieder schockartig gekühlt. Ohne Konservierungsstoffe bleiben sie bis zu 21 Tage einwandfrei verwendbar.

Die oben erwähnten Verfahren vermögen jedoch in verschiedener Hinsicht nicht vollauf zu überzeugen. Beim Cook and Chill-Verfahren wird allein mit der Schockkühlung gearbeitet, was nur eine begrenzte sichere Lagerfähigkeit von ca. 3 Tagen ermöglicht. In der Praxis wäre jedoch eine bedeutend längere Lagerfähigkeit sehr gewünscht. Beim cuisson sous vide-Verfahren andrerseits ist wohl eine lange Lagerfähigkeit garantiert, hingegen ist der Aufwand gross, die einzelne Speisen jeweils in luftdichte Beutel zu verpacken und einzeln zu vakuumieren. Das zum Gebrauch nötige Auspacken und Anrichten ist arbeitsaufwändig und es entsteht viel Abfallmaterial.

Aus der WO99/04676 ist eine Vorrichtung bekanntgeworden, die aus einem Teller aus Porzellan besteht, sowie einer dichtend auf dem Tellerrand aufliegenden Abdeckung, zum Beispiel in Form einer Glocke aus tiefgezogenem, transparenten Kunststoff. Die Glocke weist ein Einwegventil auf, durch welches der Luftinhalt der zusammengefügten Teile evakuierbar ist. Das zugehörige Serviertablett weist vorgeformte Vertiefungen zur verrutschsicheren Aufnahme von wenigstens einem Teller auf. Weiter weisen die Teller lose Einsatzbehälter auf, welche ebenfalls aus Porzellan gefertigt sind und in verschiedener Weise komplementär passgenau in den Teller einlegbar sind, sodass die Telleroberfläche in mehrere voneinander unterteilte Behälterbereiche aufgeteilt wird und die einzelnen Einlagebehälter verrutschsicher auf dem Teller gehalten sind. Mit einer solchen Vorrichtung lässt sich ein fertig angerichtetes Tellermenü abgekühlt auf ca. 2°C bis 4°C während bis zu 14 Tagen lagern und bei Bedarf innerhalb von wenigen Minuten erhitzten und servieren. Da jedoch zu jedem einzelnen Teller eine Abdeckung von hoher Stabilität nötig ist, wird entsprechend viel Platz benötigt. Bei dem in WO99/04676 vorgeschlagenen transparenten Kunststoff wirkt sich ausserdem die Lichtdurchlässigkeit ungünstig auf die Haltbarkeit der Tellergerichte aus. Schliesslich halten die Abdeckungen nicht beliebig vielen Vakuumierungen stand und erleiden mit der Zeit Brüche, sodass sie undicht werden.

Ganz allgemein wäre es wünschbar, Tellergerichte zum Beispiel in Spitälern, Heimen oder in Grosshotels frisch servieren zu können, sodass der Empfänger sich ähnlich bedient fühlte, wie wenn er in einem kleinen Gourmet-Restaurant speisen würde. Gefragt ist ein System, um die Speisen mit wenig Aufwand in möglichst guter Qualität möglichst lange haltbar zu machen. Die Speisen sollten ohne viele zusätzliche Handgriffe transportier- und lagerbar sein und letztendlich rasch und einfach für das unmittelbare Essen zubereitet und serviert werden können.

Es ist daher die Aufgabe der vorliegenden Erfindung, eine Vorrichtung zum Zwischenlagern und Transportieren von gekochten Speisen und Tellergerichten zu schaffen, mittels welcher die Speisen bereit zum Anrichten oder im bereits angerichteten Zustand wesentlich länger haltbar sind als in herkömmlichen Behältern für solche Speisen oder Tellergerichte, und welche ausserdem ein einfaches Transportieren und Zwischenlagern der Speisen und Tellergerichte ermöglicht. Mit dieser Vorrichtungen sollen die oben erwähnten Probleme herkömmlicher Transport- und Zwischenlagersysteme beseitigt werden. Die Vorrichtung soll dauerhaft einsetzbar sein und das Transportieren und Zwischenlagern von Speisen und Tellergerichten bei hoher Zuverlässigkeit der Frischhaltung ermöglichen.

Diese Aufgabe wird gelöst von einer Vorrichtung zum Transportieren und Zwischenlagern von gekochten Speisen und Tellergerichten, bestehend aus einem kastenförmigen, hochkant angeordneten Behälter mit Rädern und aufschwenkbarer Fronttüre, die sich dadurch auszeichnet, dass der Behälter von der Fronttüre luftdicht verschliessbar ist und mindestens ein schliess- und öffnenbares Luftventil nach aussen aufweist, sowie eine Einrichtung zum Messen und Speichern sowie zum von aussen ablesbaren Anzeigen der Temperatur und des Druckes im Innern des verschlossenen Behälters über eine Zeitperiode von wenigstens 14 Tagen.

Die Vorrichtung wird anhand der nachfolgenden Zeichnungen, die sie in verschiedenen Ansichten zeigen, im Detail beschrieben und ihre Funktion und Handhabung wird erläutert.
Es zeigt:
- Figur 1:: Die Vorrichtung in einer perspektivischen Gesamtansicht mit geschlossenen Türen;
- Figur 2:: Die Vorrichtung nach Figur 1 mit offenen Türen;
- Figur 3:: Eine Explosionszeichnung der Vorrichtung, in welcher sämtliche wesentlichen Bauteile einsehbar sind;
- Figur 4:: Die Bodenplatte des Vorrichtung;
- Figur 5:: Die Zwischenplatte der Vorrichtung für einen Behälter mit zwei übereinander angeordneten Fronttüren;
- Figur 6:: Die Zwischenplatte der Vorrichtung für einen Behälter mit einer einzigen Fronttüre;
- Figur 7:: Die Deckelplatte der Vorrichtung mit dem darauf aufgebauten Kasten mit Display;
- Figur 8:: Das einstückige Bauelement, welches die Seitenwände und die Rückwände des Behälters oder eines Behälterstockwerkes bildet, in einer perspektivischen Ansicht, mit den auf die vorderen Ränder aufgestülpten Rahmenprofilen;
- Figur 9:: Eine schematische Darstellung der Prinzipschaltung der Einrichtung zum Messen, Speichern und Ausgeben der Messdaten und Anzeigen derselben in einem Display.

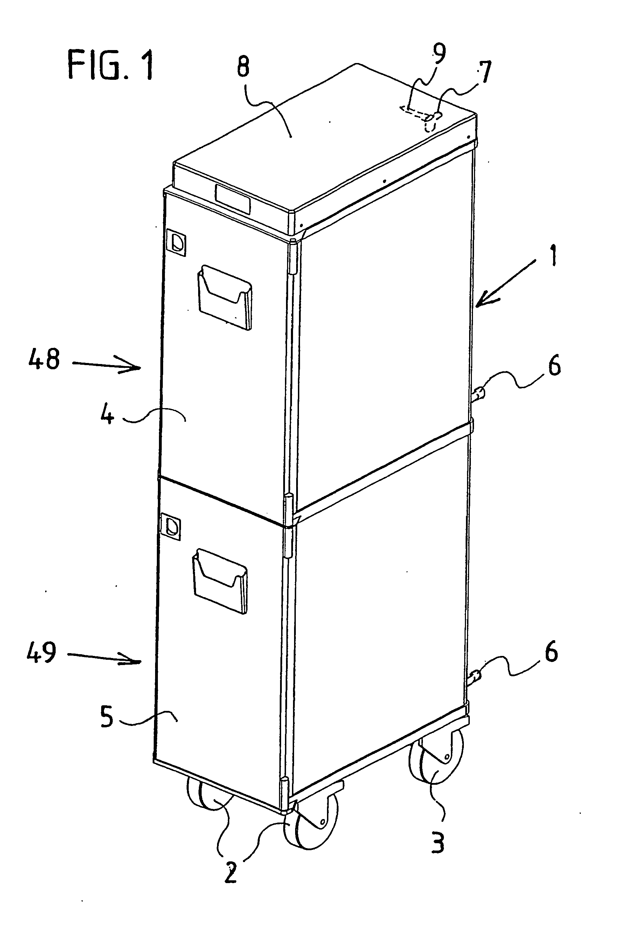

Die Figur 1 zeigt die Vorrichtung in einer perspektivischen Gesamtansicht. Es handelt sich um einen kastenartigen Behälter 1, der hochkant aufgestellt ist und auf Rädern 2,3 steht, wobei vorteilhaft die hinteren Räder 3 eine zum Behälter 1 fixe Spur aufweisen, während die vorderen Räder 2 Freilaufräder sind, deren Spurrichtung also um 360° schwenkbar ist. Mit einem derartigen üblichen Fahrwerk lässt sich der Behälter 1 sehr leicht verschieben und in Ecken und Lücken hineinmanövrieren. Auf seiner Frontseite ist der Behälter 1 mit mindestens einer schwenkbaren Türe ausgerüstet. Im gezeigten Beispiel weist er zwei übereinander angeordnete Behälterabteile 48,49 auf, die je mit einer schwenkbaren Fronttüre 4,5 verschliessbar sind. In gleicher Weise könnte der Behälter auch in drei oder noch mehr Behälterabteile aufgeteilt sein. Das Besondere an diesem Behälter 1 ist es, dass die Fronttüren 4,5 luftdicht verschliessbar sind und auch der Behälter 1 selbst überall luftdicht ausgeführt ist, und weiter dass er mindestens ein schliess- und öffnenbares Luftventil 6 nach aussen aufweist. Im gezeigten Beispiel sind zwei Ventile 6 auf seiner Rückseite vorgesehen, über welche die Luft im Innern der beiden Behälterabteile 48,49 bei geschlossenen Türen 4,5 herauspumpbar ist, sodass ein ein Quasi-Vakuum im Innern der Behälterabteile 48,49 herrscht. Ein weiteres Ventil 7 dient zum Belüften des Behälters 1 und somit zum Aufgeben des Vakuums. Es ist mit einem blombierbaren Betätigungshebel 9 oder Ventilrad versehen und kann von Hand geöffnet werden. Weil es oben im Innern des Deckels 8 untergebracht, ist es hier nur gestrichelt eingezeichnet. Es ist deshalb unterhalb des Deckels untergebracht, dass es nicht allzu leicht zugänglich ist und daher nicht versehentlich geöffnet werden kann. Bei seiner Öffnung strömt Aussenluft in das Behälterinnere und lässt den Druck darin auf den Aussendruck ansteigen. Hernach lassen sich die Türen 4,5 öffnen. Schliesslich gehört zu dem Behälter 1 eine Einrichtung 8 zum Messen und Speichern sowie zum von aussen ablesbaren Anzeigen der Temperatur und des Druckes im Innern des verschlossenen Behälters 1. Weil diese Daten über eine bestimmte Zeitperiode gemessen und abgespeichert werden, können sie als Diagramme über eine Zeitperiode von wenigstens 14 Tagen angezeigt und ausgelesen werden, wonach sie gegebenenfalls ausgedruckt werden können. Schliesslich lässt sich mit der Einrichtung 8 auch noch ein Identifikationscode eingeben und abspeichern, welcher dann bis zur Entnahme die im Behälter zwischengelagerten Speisen begleitet, sodass zu einem späteren Zeitpunkt die erfassten Daten jederzeit diesen Speisen zugeordnet werden können. Der Behälter 1 ist so konstruiert, dass er ohne Formveränderungen die wirkenden Kräfte bei starkem herrschenden Unterdrucken aufnehmen kann, die in seinem Innern erzeugt werden, und dass er auch unter diesen starken Unterdrucken von 10 mbar bis 30 mbar einwandfrei luftdicht bleibt.

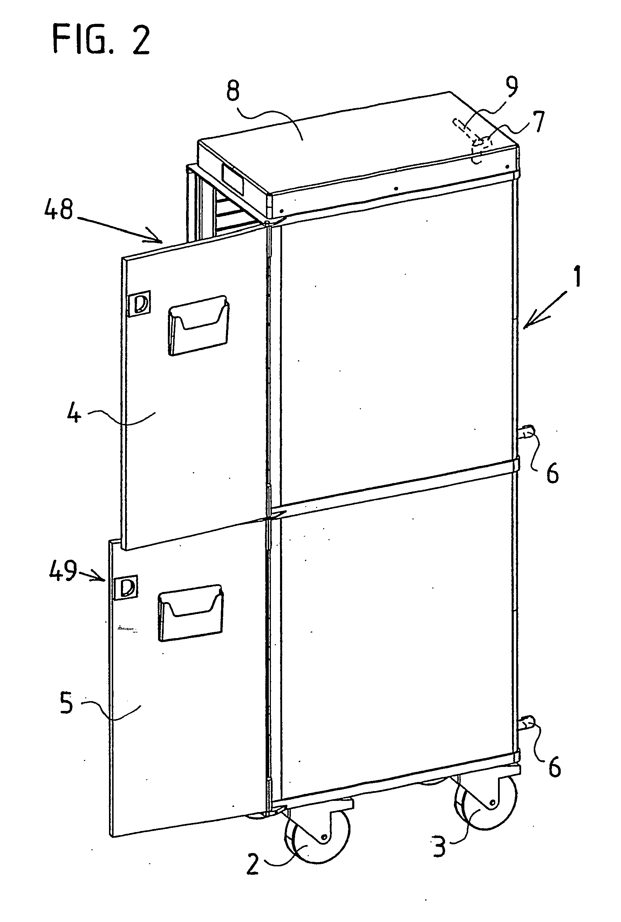

Die Figur 2 zeigt den Behälter 1 mit geöffneten Fronttüren 4,5. Wenn der Behälter über zwei übereinander angeordnete getrennte Fronttüren 4,5 verfügt, ist auch sein Inneres entsprechend in zwei übereinander angeordnete Behälterabteile 48,49 aufgetrennt. Jede Türe 4,5 ist separat luftdicht abschliessbar, indem sie im geschlossenen Zustand auf eine umlaufende Gummidichtung gepresst wird. Jedes Behälterabteil 48,49 kann deshalb separat unter einen Unterdruck gesetzt werden und wieder belüftet werden und ist separat öffnen- und schliessbar.

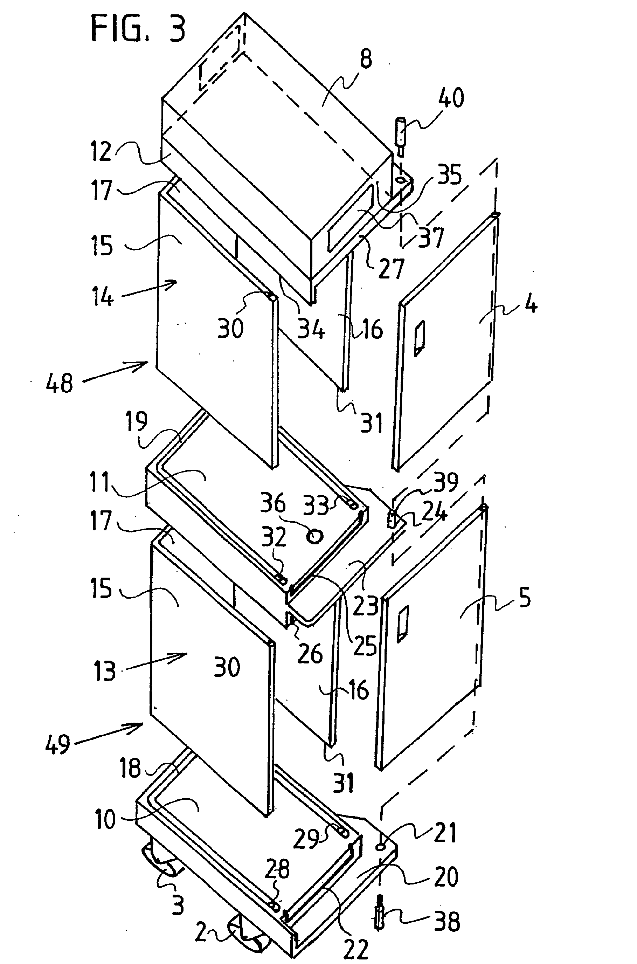

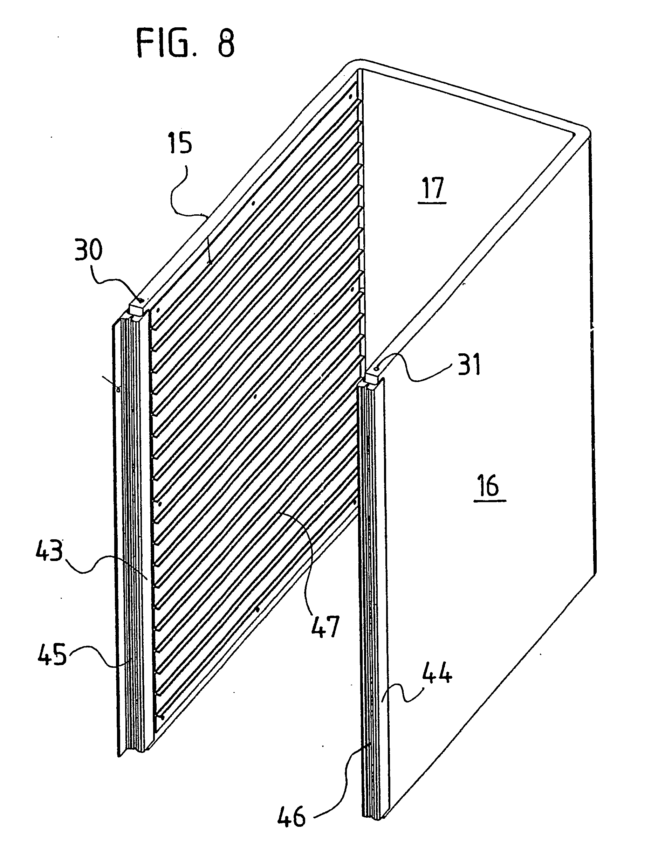

Die Figur 3 zeigt eine Explosionszeichnung der verschiedenen Bauteile der Vorrichtung. Im hier gezeigten Beispiel besteht der Behälter 1 aus einer Bodenplatte 10, einer Zwischenplatte 11, einer Deckelplatte 12 sowie zwei hier identischen, im Grundriss U-förmigen und einstückigen Wandelementen 13,14. Diese bilden jeweils die linke Seitenwand 15, die gegenüberliegende rechte Seitenwand 16 und die dazwischen im rechten Winkel verlaufende zugehörige Rückwand 17 eines Behälterabteils 48,49 oder Behälterstockwerks. Der Behälter 1 ist nun so konstruiert, dass diese Bauteile 10-14 gewissermassen wie ein Sandwich aufeinander zu liegen kommen und die zwischenliegenden Elemente 13,11,14 zwischen der Bodenplatte 10 und der Deckelplatte 12 eingeklemmt und mit ihnen verspannt werden. Zu diesem Zweck weist die Bodenplatte 10, die aus Vollmaterial besteht, eine im Grundriss U-förmige Einfräsung auf, hier in Form einer U-förmigen Nut 18, in welche das U-förmige Wandelement 13 mit seinem unteren Rand einpasst. In gleicher Weise ist aus der Unterseite der Zwischenplatte 11 eine gleiche U-förmige Nut ausgenommen. In diese hier nicht sichtbare Nut passt der obere Rand des unteren Wandelementes 13 ein. Auf der Oberseite der Zwischenplatte 11 ist wiederum eine U-förmige Nut 19 zur Aufnahme des unteren Randes des oberen U-förmigen Wandelementes 14 ausgenommen. Und schliesslich ist aus der Deckelplatte 12 auf ihrer Unterseite eine hier ebenfalls nicht sichtbare U-förmige Nut ausgefräst, in welche der obere Rand des oberen Wandelementes 14 einpasst. Die Bodenplatte 10 weist auf ihrer Vorderseite eine Auskragung 20 auf, die etwas tiefer liegt als die Oberseite der Bodenplatte. Die Auskragung 20 erstreckt sich rund um die rechte vordere Ecke der Bodenplatte und weist dort eine Bohrung 21 auf, die zur Aufnahme eines Scharnierbolzens bestimmt ist. Aus der Frontseite der Bodenplatte 10 ist oberhalb der Auskragung 20 eine Nut 22 ausgefräst, in welche der horizontale Abschnitt einer umlaufenden Gummidichtung eingelegt werden kann. Betrachtet man die Zwischenplatte 11, so erkennt man, dass eine ähnliche Auskragung 23 auch dort aus dem Vollmaterial herausgearbeitet ist, die ebenfalls eine Bohrung 24 für einen Scharnierbolzen aufweist. An der Zwischenplatte 11 ist jedoch auf der Frontseite nicht nur über der Auskragung eine Nut 25 ausgefräst, sondern auch unterhalb dieser Auskragung 23 ist eine weitere Nut 26 aus der Frontseite ausgefräst. Diese Nuten 22,25,26 sind zur Aufnahme der horizontalen Abschnitte der umlaufenden Gummidichtungen für die entsprechenden Türen bestimmt. Die vertikalen Abschnitte der umlaufenden Gummidichtungen verlaufen längs der Vorderränder der Wandelemente 13,14 in dort vorhandenen Nuten, die in Figur 8 näher gezeigt sind. Die Deckelplatte 12 entspricht im Prinzip der Bodenplatte 22, bloss dass sie spiegelverkehrt zur letzteren ist. Ihre Auskragung 27 erstreckt sich aber auch um die rechte vordere Ecke und ist mit der Oberseite der Deckelplatte 12 bündig. Aus der Frontseite der Deckelplatte 12, unterhalb der Auskragung, ist eine hier nicht einsehbare Nut aus der Frontseite ausgefräst, gleich wie die Nut 22 in der Bodenplatte 10. In der Bodenplatte 10 sind zwei Gewindebohrungen 28,29 je nahe der Enden der U-förmigen Nut 18 angeordnet, sodass diese Gewindebohrungen 28,29 durch den Boden der Nut 18,19 in das Material der Bodenplatte 11 führen. Entsprechende Bohrungen 30,31 durchsetzen die Endbereiche der beiden Schenkel des U-förmigen Wandelementes 13 in wenig Abstand vom vorderen Rand. Das Wandelement 13 kann daher zwei Gewindestangen aufnehmen, die sich in seinem Inneren längs seiner vorderen Ränder erstrecken. Das genau Gleiche trifft für das U-förmige Wandelement 14 des oberen Behälterabteils 48 zu. Die Zwischenplatte 11 weist an gleicher Stelle ebenfalls Bohrungen auf, jedoch durchgehende Bohrungen 32,33. In der Unterseite der Deckelplatte 12 sind ebenso durchgehende Bohrungen 34,35 vorhanden, jedoch Stufenbohrungen, die jedoch hier nicht einsehbar sind. Vor dem Aufeinanderstellen der einzelnen Bauteile werden die Nuten 18,19 an Boden- 10 und Zwischenpatte 11 sowie auch die entsprechenden nicht einsehbaren Nuten auf der Unterseite der Zwischenplatte 11 und der Deckelplatte 12 mit einer speziellen Dichtmasse gefüllt. Hernach wird auf die Bodenplatte 10 zunächst das Wandelement 13 und dann auf dieses die Zwischenplatte 11 aufgesetzt. Auf die Zwischenplatte 11 kommt hernach das obere Wandelement 15 und auf dessen oberen Rand wird schliesslich die Deckelplatte 12 aufgelegt. Von oben können nun Gewindestangen durch alle Bauteile hindurch bis in die Gewindebohrungen 28,29 in der Bodenplatte 10 eingeführt werden. Von der Oberseite der Deckelplatte 12 aus können diese Gewindestangen fest verspannt werden, sodass die Elemente satt zusammengepresst werden und luftdichte Verbindungen entstehen. Es versteht sich, dass die Zwischenplatte 11 weggelassen werden kann und dann ein entsprechend höheres einzelnes Wandelement eingebaut wird, oder aber ein weniger hoher Behälter gebaut wird. Ein solcher Behälter weist dann bloss eine einzige Fronttüre auf. Ansonsten verfügt er über dieselben Merkmale und lässt sich praktisch gleich einsetzen, wenn auch nicht so variabel. Vorne in der Mitte der Zwischenplatte 11 ist hier noch ein Ventil 36 eingebaut, um die beiden Behälterabteile 48,49 entweder luftdicht voneinander zu trennen oder einen Druckausgleich zwischen ihnen zu schaffen. Oben auf der Oberseite der Deckelplatte 12 ist eine Einrichtung 8 mit einer Elektronik montiert, die einen Display 37 zur Anzeige der gemessenen Werte im Innern der Behälterabteile 48,49, nämlich der Temperatur und des Druckes und gegebenenfalls auch der Feuchtigkeit über die Zeit aufweist. Vor den Behälterabteilen 48,49 sind die zugehörigen Fronttüren 4,5 eingezeichnet. Diese werden mittels starker Bolzen 38,39,40 an den Auskragungen 20,23,27 angeschlagen.

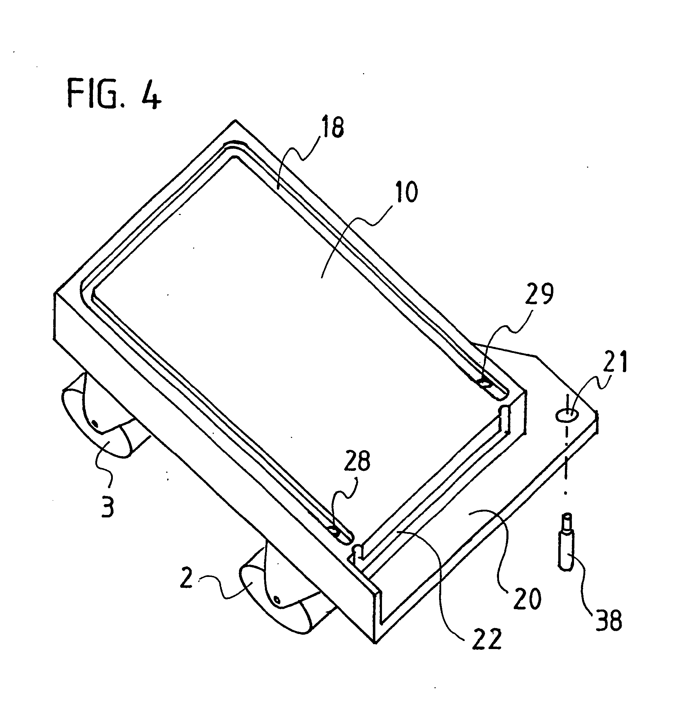

Die Figur 4 zeigt die Bodenplatte 10 in einer vergrösserten Darstellung. Sie besteht aus einem Vollmaterial, zum Beispiel aus Aluminium, denn sie muss ja leicht und sehr verwindungsstabil sein. Eigentlich sollte die Bodenplatte auch möglichst wenig wärmedurchlässig sein. Hier muss aber mit Aluminium ein gewisser Kompromiss eingegangen werden. Es ist denkbar, dass andere Materialien einsetzbar sind, welche ähnliche Werte für die Verwindungsstabilität und das Gewicht aufweisen und gleichzeitig bessere Wärmeisolationswerte aufweisen. Im gezeigten Beispiel wurde eine Aluminium-Vollmaterialplatte verwendet und mittels Ausfräsungen aus dem Vollen wurde eine Auskragung 20 geformt, die sich um die rechte vordere Ecke der Bodenplatte 10 erstreckt. Eine Bohrung 21 ist für die Aufnahme eines Scharnierbolzens für die Fronttüre des Behälters 1 vorgesehen. Von oben ist eine U-förmige Nut 18 aus dem Material der Bodenplatte 10 ausgefräst. Diese ist wie schon beschrieben zur Aufnahme des unteren Randes eines U-förmigen Wandelementes bestimmt. Nahe den vorderen Enden der U-förmigen Nut sind Gewindebohrungen 28,29 in die Bodenplatte 10 eingebracht, welche für die Aufnahme und das Verspannen von Gewindestangen bestimmt sind. In der Frontseite der Bodenplatte 10, oberhalb der Auskragung 20, erkennt man die Nut 22 für die Dichtung zur Abdichtung der Fronttüre. Auf der Unterseite der Bodenplatte 10 ist das Fahrwerk montiert. Hier besteht dieses aus zwei hinteren Rädern 3 mit fix ausgerichteter Spur und zwei vorderen Rädern 2, die frei lenkbar sind.

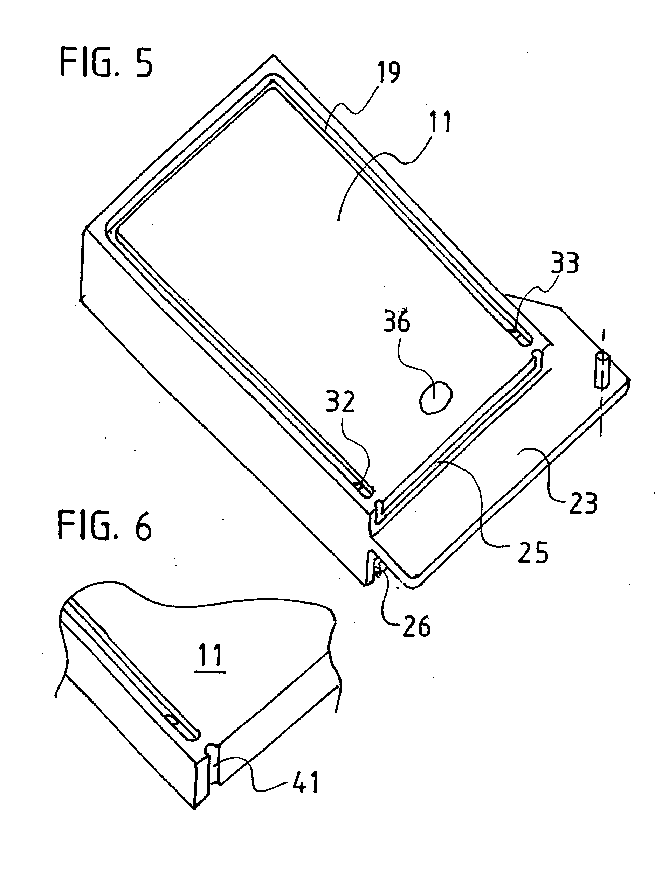

Die Figur 5 zeigt die Zwischenplatte 11 für einen Behälter mit zwei übereinander angeordneten Fronttüren. Dieser besteht aus demselben Material wie die Bodenplatte und auf seiner Vorderseite erstreckt sich eine Auskragung 23 nach vorne und um die rechte vordere Ecke. Aus der Oberseite wie auch aus der Unterseite der Zwischenplatte 11 ist je eine U-förmige Nut 19 ausgefräst, die zur Aufnahme von Wandelementen bestimmt ist. Nahe der vorderen Enden dieser Nuten 19 sind diese verbunden über durchgehende Bohrungen 32,33, die zur Aufnahme der Gewindestangen zum Verspannen der Bauteile miteinander bestimmt sind. Auf der Frontseite sowohl oberhalb wie unterhalb der Auskragung 23 erkennt man je eine Nut 25,26, die je zur Aufnahme der Dichtungen zum Abdichten der Fronttüren dienen.

Die Figur 6 zeigt die linke vordere Ecke einer modifizierten Zwischenplatte 11. Es handelt sich um die Ausgestaltung der Zwischenplatte 11 für eine Vorrichtung mit nur einer einzigen Behältertüre. In diesem Falle wird nämlich keine Auskragung benötigt, welche die beiden Türen voneinander trennt, sondern die Türe erstreckt sich über die lichten Weiten der Öffnungen beider Behälterabteile 48,49. Diese Behälterabteile ober- und unterhalb der Zwischenplatte 11 sind nicht zueinander abgedichtet, weil das ja keinen Sinne machte. Zum Öffnen der gemeinsamen Türe muss vorher ohnehin der Druck in beiden Behälterabteilen 48,49 auf den Umgebungsdruck erhöht werden. Die Türe wird an dieser modifizierten Zwischenplatte 11 nur über die vertikal verlaufenden Dichtungsabschnitte 41 abgedichtet, die in entsprechende kleine Nuten eingelegt sind.

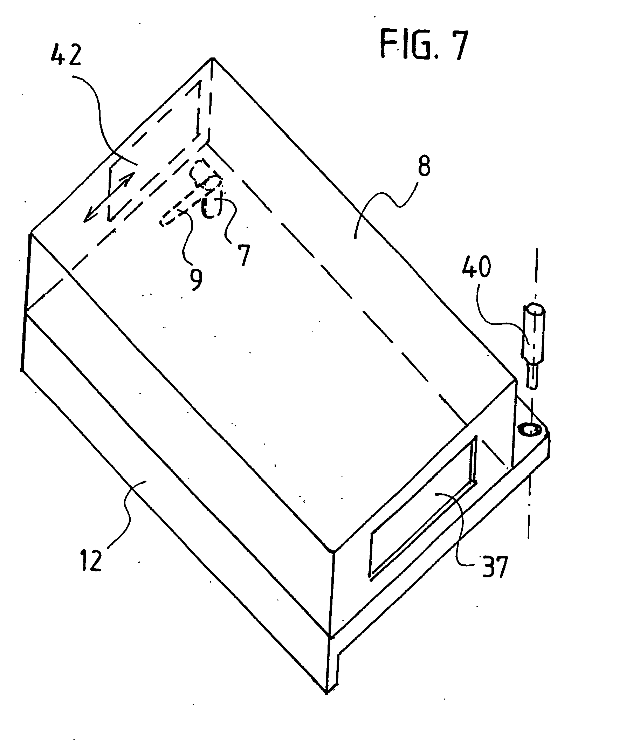

Die Figur 7 zeigt die Deckelplatte 12 der Vorrichtung mit dem darauf aufgebauten Kasten 8 mit Display 37 auf der Frontseite. Auf diesem Display kann jederzeit die Temperatur und der herrschende Druck im Behälterinnern abgelesen werden, gegebenenfalls auch die Feuchtigkeit im Behälterinnern. In einem anderen Anzeigemodus, welcher die Elektronik wahlweise ermöglicht, kann die Historie, das heisst der Temperatur- und Druckverlauf sowie evtl. der Feuchtigkeit während der vergangenen bis zu 14 Tage abgelesen werden. Die Einrichtung 8 verfügt über eine Schnittstelle, sodass alle gespeicherten Daten auf einen PC gelesen werden können und ab dem PC ausgedruckt werden können. Auf der Hinterseite der Einrichtung 8 bzw. ihrer Verschalung ist eine Schiebtüre 42 angeordnet. Hinter dieser Schiebtüre 42 ist das Druckventil 7 mit Betätigungshebel 9 angeordnet, über welches das Innere des Behälters belüftet werden kann. Das Ventil 7 ist deswegen etwas versteckt angeordnet, damit nicht Unbefugte durch allzu leichten Zugang oder Küchengehilfen aus Unbedachsamkeit Luft in einen bereits evakuierten Behälter einlassen können.

Die Figur 8 zeigt das einstückige Bauelement, welches die Seitenwände 15,16 und die Rückwand 17 des Behälters 1 oder eines Behälterstockwerkes 48,49 bildet, in einer perspektivischen Ansicht. Auf die vorderen Ränder dieses Bauelementes sind Rahmenprofile 43,44 gestülpt. Die Rahmenprofile 43,44 weisen je eine Nut 45,46 auf, in welche eine umlaufende Gummidichtung einlegbar ist, die sich je nachdem in die Nuten 22,25,25 erstreckt. Diese Rahmenprofile 43,44 sind mit den vorderen Rändern des Bauelementes dichtend verklebt. Das in der Zeichnung links angeordnete Rahmenprofil 43 läuft in einen Fortsatz aus, welcher zum kraftschlüssigen Verschliessen der Türe dient. Hierzu ist die Türe mit einem Schliessmechanismus versehen, welcher grosse Schliesskräfte aufbaut und hält. Auf der Oberseite des Bauelementes erkennt man die Bohrungen 30,31, durch welche die Gewindestangen zum Verspannen der einzelnen Bauteile führen. Das Bauelement selbst besteht aus einem hochsteifen Leichtbaumaterial. Geeignet ist zum Beispiel eine Sandwichplatte mit einem geschäumten Kern und beidseits darauf verleimten Aluminiumplatten. Derartige Platten werden zum Beispiel zum Bau von Fussböden in Flugzeigen eingesetzt. Umgekehrt kann auch eine Platte aus einer Aluminiumwabenstruktur oder ein Laminat aus mehreren Schichten von solchen Strukturplatten geeignet sein, die beidseits mit wärmeisolierenden Kunststoffplatten verleimt sind. Die Seitenwand und die Rückwand des Bauelementes muss ja enorme Kräfte aufnehmen, wenn das Innere des Behälters evakuiert wird und dort ein Druck von nur noch ca. 10 mbar bis 30 mbar herrscht. Gleichzeitig sollten die Wände möglichst wenig Wärme durchlassen. Auf der Innenseite des Bauelementes sind die Seitenwände mit Tablett-Auflagen 47 ausgerüstet. Diese können aus Aluminium oder aus einem Kunststoff gefertigt sein und mit der Innenseite der Seitenwand verklebt sein. Diese Tablett-Auflagen 47 bilden eine Reihe übereinander angeordnetener Tragleisten, auf welche dann die Tablette aufschiebbar sind.

Die Türe oder die Türen 4,5 im Falle von zwei oder mehr Türen sind mit starken Scharnierbolzen 38,39,40 an der Boden- 10, Zwischen- 11 und Deckelplatte 12 angeschlagen. Auf der freien Seite sind die Türen 4,5 mit Hebel- oder Gewindeverschlüssen satt auf die Dichtungen pressbar, auf denen sie mit ihrer Innenseite anliegen. Die Verschlüsse müssen so ausgelegt sein, dass nach dem Verschliessen der Türen das Behälterinnere luftdicht gegen aussen abgedichtet ist.

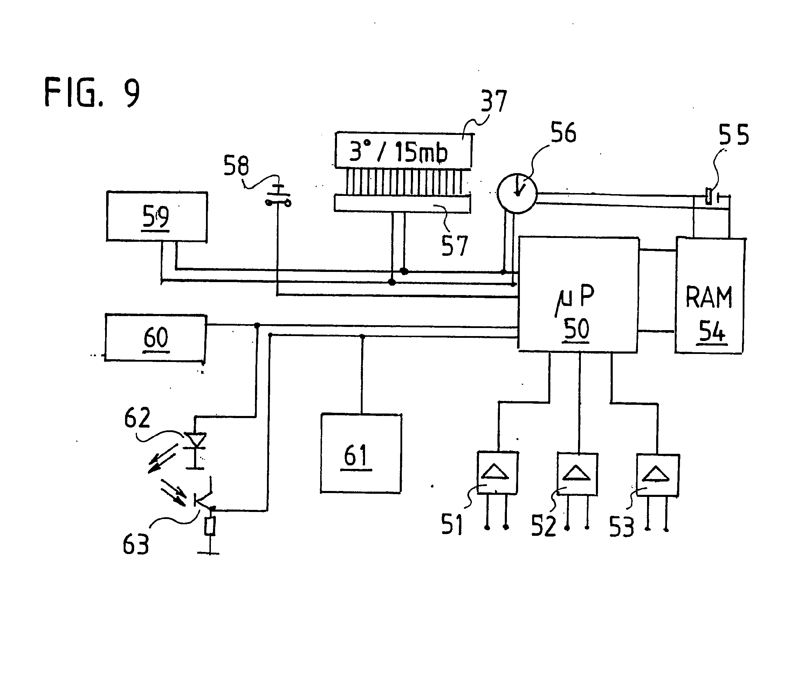

Die Figur 9 zeigt eine schematische Darstellung der Prinzipschaltung der Einrichtung zum Messen, Speichern der Messdaten und Anzeigen derselben in einem Display. Die Einrichtung erlaubt mindestens das Messen der Temperatur und des Druckes im Behälterinnern. In der hier gezeigten Ausführung kann sie allerdings auch die Feuchtigkeit im Behälterinnern messen. Hierzu dient je ein Fühler oder Sensor, das heisst ein Temperatursensor 51, ein Feuchtigkeitssensor 52 und ein Drucksensor 53. Diese liefern elektrische Signale an einen Mikroprozessor 50, der mit einem Schreib-Lesespeicher RAM (Random Access Memory) 54 verbunden ist. Dieser wird von einer 3 Volt Lithium-Batterie 55 mit Strom versorgt. Er erhält Daten von einer elektronischen Uhr 56 und von einem EPROM IDENT (Erasable Programmable Read Only Memory) 59, in welchem jeder Charge, die in den Behälter gestellt wird, ein Identifikationscode zugeordnet wird. Diese Eingabe an das EPROM IDENT 59 erfolgt über die Bedientasten oder Knöpfe 58. Die Daten werden an den Mikroprozessor 50 geliefert und dort mit jenen aus dem RAM 54 verarbeitet. Sie gelangen über den Treiber 57 an den Display 37 zur Anzeige. Aber nicht nur über den Display 37 können die Daten ausgelesen werden, sondern auch über eine Kommunikationsschnittstelle (RS 232) 60. Anstelle oder parallel zu einem solchen kabelgestützten Kommunikationsport ist hier noch eine Infrarotschnittstelle 62,63 vorgesehen, mittels welcher die Daten drahtlos an einen PC übermittelbar sind. Wie schon erwähnt wird jeder Speisecharge ein Identifikationscode zugeordnet, welcher über die Taste 58 eingebbar ist. Fortan wird die Temperatur, die Feuchtigkeit und der Druck im Innern des nun verschlossenen Behälters laufend gemessen und die Daten werden gespeichert. In jedem Augenblick können die aktuellen Messdaten im Display 37 angezeigt werden, sodass jederzeit überprüfbar ist, was die Temperatur und der Druck sowie die Feuchte im Innern des Behälter ist. Aber auch im zeitlichen Verlauf sind diese Werte im Display 37 anzeigbar. Im Schema als Beispiel gezeigt ist die Anzeige einer Temperatur von 1.5°C und einem Druck von 15mbar. Ausserdem können diese Daten über die Kommunikationsschnittstellen, sei es über die RS 232 Schnittstelle 60 oder über die Infrarotschnittstellen 62,63 für In- und Ausgang ausgelesen werden und in einem PC zu entsprechenden Diagrammen verarbeitet und ausgedruckt werden. Somit ist es möglich, jede im Behälter gelagerte oder transportierte Speisecharge auch nachträglich zu identifizieren und ihre Historie zurückzuverfolgen. Bei Qualitätsmängeln kann nachgewiesen werden, ob etwa der Druck, die Temperatur oder die Feuchte im Behälterinnern über die Verweilzeit nicht in der vorgeschriebenen Bandbreite waren. Die Temperatur sollte im Idealfall stets zwischen 2°C und 4°C betragen und der Druck nicht über 20mbar ansteigen. Die Feuchtigkeit soll zwischen 30% und 90% relativer Luftfeuchtigkeit liegen. Es können Toleranzen vorgeschrieben werden, innerhalb welcher die Qualität der gelagerten und transportierten Speisen über eine bestimmte Zeitperiode gewährleistet werden können.

Die Anwendung dieser Vorrichtung geht nun wie folgt vonstatten, wobei unterschieden werden kann, ob sie fixfertig angerichtete Tellergerichte aufnimmt oder aber Speiseträger mit verschiedenen Inhalten. So kann sie zum Beispiel mehrere Speiseträger für Suppe, für Fleisch, für Gemüse und für Füllstoffe wie Teigwaren, Kartoffeln oder Reis aufnehmen. In jedem Fall werden die Speisen nahezu vollständig gegart und hernach rasch auf 2°C bis 4°C abgekühlt. Sobald die Schockkühlung vollendet ist, gelangen die Speisen in diese Vorrichtung. Zu jeder Charge wird an einem PC Buch geführt. Jede Charge wird mit einem Laufcode versehen, welcher in den vorrichtungseigenen Mikrochip eingespeichert wird. Ab sofort werden die Temperatur, der Druck und die Feuchtigkeit laufend gemessen und die Daten werden fortlaufend abgespeichert. Die Türe wird dann verschlossen und der Behälter wird unter Unterdruck gesetzt, indem über das Luftventil über eine externe Vakuumpumpe die Luft aus seinem Innern abgepumpt wird, bis das Vakkuum mindestens einen Druck von 10 mbar bis 30 mbar erreicht hat. Nun kann die Charge über 10 bis 14 Tage zwischengelagert werden, ohne dass die gelagerten Speisen dadurch eine wesentliche Qualitätseinbusse erleiden. Werden die Speisen schliesslich benötigt, so prüft man zunächst, ob die Tempertur und der Druck vor der Entnahme der Speisen noch in Ordnung sind, belüftet hernach den Behälter durch Betätigen des Hebels 9 des Ventils 7 unter dem Deckel und kann dann die Türe öffnen und die Speisen entnehmen. Diese werden sodann während ca. 15 Minuten stehengelassen, damit sie wieder Luft und insbesondere Sauerstoff aufnehmen können. Im Falle von fertig angerichteten Tellergerichten können diese dann bloss noch in einen Dampferhitzer (Steamer) gestellt werden und sind innert weniger Sekunden bereit zum Servieren. Im Falle von Speiseträgern, welche verschiedene Essenszutaten enthalten, werden entweder die ganzen Speiseträger mit Inhalt im Dampferhitzer erhitzt und hernach werden die Zutaten gesondert serviert, oder die heissen Zutaten werden auf Teller angerichtet, im Steamer erhitzt und anschliessend sofort serviert.

## Patentansprüche

1. Vorrichtung zum Transportieren und Zwischenlagern von gekochten Speisen und Tellergerichten, bestehend aus einem kastenförmigen, hochkant angeordneten Behälter (1) mit Rädern (2,3) und mindestens einer aufschwenkbaren Fronttüre (4,5), ***dadurch gekennzeichnet,* dass** der Behälter (1) von der Fronttüre (4,5) luftdicht verschliessbar ist und mindestens ein schliess- und öffnenbares Luftventil (6) nach aussen aufweist, sowie eine Einrichtung (8) zum Messen und Speichern sowie zum von aussen ablesbaren Anzeigen der Temperatur und des Druckes im Innern des verschlossenen Behälters (1) als Diagramme über eine Zeitperiode von wenigstens 14 Tagen.

2. Vorrichtung zum Transportieren und Zwischenlagern von gekochten Speisen und Tellergerichten nach Anspruch 1, ***dadurch gekennzeichnet,* dass** der Behälterboden eine einzige Materialplatte (10) ist, an deren Unterseite die Räder (2,3) montiert sind, und dass die Rückwand (17) sowie die beiden daran anschliessenden Seitenwände (15,16) ein einstückiges, im Grundriss U-förmiges Bauteil (13,14) bilden, das dichtend in einer Nut (18) im Behälterboden (10) positioniert ist, und ein Behälterdeckel (12) mittels Einfräsungen auf seiner Unterseite unverrückbar auf die oberen Ränder der Seitenwände (15,16) und der Rückwand (17) passt und die lichte Weite des U-förmigen Bauteils (14) dichtend überdeckt, sowie dass der Behälterboden (10), die Seitenwände (5,16,17) und der Behälterdeckel (12) an den Rändern, die der offenen Seite des Behälters (1) zugewandt sind, eine umlaufende nahtlose Gummidichtung tragen, sodass durch Zuziehen der Fronttüre (4,5) der Behälter (1) dichtend verschliessbar ist.

3. Vorrichtung zum Transportieren und Zwischenlagern von gekochten Speisen und Tellergerichten nach einem der vorangehenden Ansprüche, ***dadurch gekennzeichnet,* dass** die vertikale Rückwand (17) und die vertikalen Seitenwände (15,16) des Behälters (1) aus einem laminierten Leichtbaumaterial bestehen.

4. Vorrichtung zum Transportieren und Zwischenlagern von gekochten Speisen und Tellergerichten nach einem der vorangehenden Ansprüche, ***dadurch gekennzeichnet,* dass** die vertikale Rückwand (17) und die vertikalen Seitenwände (15,16) des Behälters (1) einstückig aus einem geschäumten Kern bestehen, der beidseits mit Aluminiumplatten beschichtet ist.

5. Vorrichtung zum Transportieren und Zwischenlagern von gekochten Speisen und Tellergerichten nach einem der vorangehenden Ansprüche, ***dadurch gekennzeichnet,* dass** der Behälter (1) in der Höhe in zwei Stockwerke (48,49) unterteilt ist, indem die vertikale Rückwand (17) und die vertikalen Seitenwände (15,16) von einem Zwischenboden (11) aus einer Materialplatte (11) unterbrochen sind, auf deren Unter- und Oberseite die Wände in dort eingefrästen Nuten (19) positioniert sind.

6. Vorrichtung zum Transportieren und Zwischenlagern von gekochten Speisen und Tellergerichten nach einem der Ansprüche 1 bis 4, ***dadurch gekennzeichnet,* dass** der Behälter (1) in der Höhe in drei Stockwerke unterteilt ist, indem die vertikale Rückwand (17) und die vertikalen Seitenwände (15,16) von zwei Zwischenböden (11) aus einer Materialplatte unterbrochen sind, auf deren Unter- und Oberseite die Wände (15,16,17) in dort eingefrästen Nuten (18,19) positioniert sind.

7. Vorrichtung zum Transportieren und Zwischenlagern von gekochten Speisen und Tellergerichten nach einem der vorangehenden Ansprüche, ***dadurch gekennzeichnet,* dass** über die der Fronttüre (4,5) zugewanden Ränder der beiden Seitenwände (15,16) je ein Rahmen-U-Profil (43,44) dichtend aufgestülpt ist, auf dessen Oberseite eine Nut (45,46) zum Einlegen einer Gummidichtung eingefräst ist, wobei mindestens das eine Rahmen-U-Profil in montierter Lage auf der Aussenseite einen sich nach vorne erstreckenden Fortsatz aufweist, zum Zuschliessen der Fronttüre (4,5).

8. Vorrichtung zum Transportieren und Zwischenlagern von gekochten Speisen und Tellergerichten nach einem der vorangehenden Ansprüche, ***dadurch gekennzeichnet,* dass** die Bodenplatte (10) durch Ausfräsungen aus Vollmaterial hergestellt ist, indem sie auf der Oberseite eine ausgefräste Nut (18) zur Aufnahme der Seitenwände (15,16) und der Rückwand (17) aufweist, sowie auf der Vorderseite eine von oben ausgefräste Ausnehmung, sodass eine auf der Unterseite der Bodenplatte (10) mit der Unterseite bündige Auskragung (20) geformt ist, welche sich um eine Vorderecke der Bodenplatte (10) erstreckt und eine Bohrung (21) für den Scharnierbolzen (32) der Fronttüre (5) aufweist, und dass die oberhalb der Auskragung (20) gebildete Frontseite der Bodenplatte (10) eine ausgefräste Nut (22) zur Aufnahme einer Gummidichtung aufweist, weiter dass die Deckelplatte (12) spiegelverkehrt identisch geformt ist, und dass die einstückige Zwischenplatte (11) die Form einer imaginären Deckelplatte (12) und einer passgenau darauf gelegten imaginären Bodenplatte (10) aufweist, wobei die Auskragung der imaginären Deckelplatte gleichzeitig jene der imaginären Bodenplatte bildet, wobei oberhalb derselben (23) die obere Fronttüre (4) zu liegen kommt und unterhalb derselben die untere Fronttüre (5).

9. Vorrichtung zum Transportieren und Zwischenlagern von gekochten Speisen und Tellergerichten nach einem der vorangehenden Ansprüche, ***dadurch gekennzeichnet,* dass** die Boden- (10) und Deckelplatte (12) sowie im Falle einer Zwischenplatte (11) auch diese aus Aluminium-Vollmaterial hergestellt sind.

10. Vorrichtung zum Transportieren und Zwischenlagern von gekochten Speisen und Tellergerichten nach einem der vorangehenden Ansprüche, ***dadurch gekennzeichnet,* dass** auf der Deckelplatte (12) ein Kasten (8) mit einem Display (37) sowie Bedientasten oder -knöpfen angeordnet ist, in welchem die Einrichtung mit Elektronik zum Messen und Speichern sowie zum von aussen ablesbarem Anzeigen der Temperatur und des Druckes im Innern des verschlossenen Behälters über eine Zeitperiode von wenigstens 14 Tagen untergebracht ist.

## Claims

1. A device for the transport and the intermediate storage of cooked food and set-dish meals, consisting of a box-like, uprightly arranged container (1) with wheels (2,3) and with at least one front door (4, 5) able to be pivoted open, **characterised in that** the container (1) may be closed in an airtight manner by the front door (4, 5) and comprises at least one air valve (6) to the outside which may be closed and opened, as well as a means (8) for measuring and storing as well as for displaying the temperature and the pressure in the inside of the closed container (1) such that they may be read off from the outside, as diagrams over a time period of at least 14 days.

2. A device for the transport and the intermediate storage of cooked food and set-dish meals according to claim 1, **characterised in that** the container base is a single material plate (10) on whose lower side the wheels (2, 3) are assembled, and that the rear wall (17) as well as the two side walls (15, 16) connecting thereto form a one-piece component (13, 14) U-shaped in a plan view, which is sealingly positioned in a groove (18) in the container base (10), and a container lid (12) by way of milled recesses on its lower side fits in an unmovable manner onto the upper edges of the side walls (15, 16) and of the rear wall (17) and sealingly covers the clear space of the U-shaped component (14), as well as that the container base (10), the side walls (5, 16, 17) and the container lid (12) at the edges which face the open side of the container (1) carry a peripheral, seamless rubber seal so that the container (1) may be closed in a sealed manner by way of pulling the front door (4,5) shut.

3. A device for the transport and the intermediate storage of cooked food and set-dish meals according to one of the preceding claims, **characterised in that** the vertical rear wall (17) and the vertical side walls (15, 16) of the container (1) consists of a laminated lightweight construction material.

4. A device for the transport and intermediate storage of cooked food and set-dish meals according to one of the preceding claims, **characterised in that** the vertical rear wall (17) and the vertical side walls (15, 16) of the container (1) consist of one piece of a foamed core which on both sides is coated with aluminium plates.

5. A device for the transport and the intermediate storage of cooked food and set-dish meals according to one of the preceding claims, **characterised in that** the container (1) in height is divided into two storeys (48, 49) **in that** the vertical rear wall (17) and the vertical side walls (15, 16) are interrupted by an intermediate base (11) of a material plate (11) on whose lower and upper side the walls are positioned in grooves (18, 19) which are milled in here.

6. A device for the transport and the intermediate storage of cooked food and set-dish meals according to one of the claims 1 to 4, **characterised in that** the container (1) in height is divided into three storeys **in that** the vertical rear wall (17) and the vertical side walls (15, 16) are interrupted by two intermediate bases (11) of a material plate on whose lower and upper side the walls (15, 16, 17) are positioned in grooves (18, 19) which are milled in here.

7. A device for the transport and the intermediate storage of cooked food and set-dish meals according to one of the preceding claims, **characterised in that** in each case a frame-U-profile (43, 44) is sealingly placed over those edges of the two side walls (15, 16) which face the front door (4, 5), and a groove (45, 46) for inserting a rubber seal is milled on the upper side of the profile, wherein at least the one frame-U-profile in the assembled position on the outer side comprises a continuation extending to the front, for closing the front door (4, 5) shut.

8. A device for the transport and the intermediate storage of cooked food and set-dish meals according to one of the preceding claims, **characterised in that** the base plate (10) is manufactured by milled recesses from the solid material **in that** on its upper side it comprises a milled groove (18) for accommodating the side walls (15, 16) and the rear wall (17), as well on the front side, a recess milled out from above, so that a projection (20) is formed on the lower side of the base plate (10) which is flush with the lower side and which extends around a front edge (corner) of the base plate (10) and comprises a bore (21) for the hinge pins (32) of the front door (5), and that the front side of the base plate (10) formed above the projection (20) comprises a milled out groove (22) for accommodating a rubber seal, further that the lid plate (22) is shaped identically in a mirror-imaged manner, and that the one-piece intermediate plate (11) has the shape of an imaginary lid plate (12) and of an imaginary base plate (10) applied thereon in an exactly fitting manner, wherein the projection of the imaginary lid plate at the same time forms that of the imaginary base plate, wherein the upper front door (4) comes to lie above this (23) and the lower front door (5) below this.

9. A device for the transport and the intermediate storage of cooked food and set-dish meals according to one of the preceding claims, **characterised in that** the base plate (10) and lid plate (12) as well as in the case of an intermediate plate (11) this too, are manufactured of solid aluminium material.

10. A device for the transport and intermediate storage of cooked food and set-dish meals according to one of the preceding claims, **characterised in that** a box (8) with a display (37) as well as operating keys or buttons is arranged on the lid plate (12), in which the means with electronics for measuring and storing as well as for the externally readable display of the temperature and of the pressure in the inside of the closed container over a time period of at least 14 days is accommodated.

## Revendications

1. Dispositif pour le transport et le stockage intermédiaire de mets cuits et de plats sur assiette cuits, composé d'une enceinte (1) en forme de parallélépipède, disposée de chant et comportant des roues (2, 3) ainsi qu'au moins une porte frontale (4, 5) s'ouvrant par pivotement, ***caractérisé en ce que*** l'enceinte (1) peut être fermée de manière étanche à l'air par la porte frontale (4, 5) et qu'elle comporte vers l'extérieur au moins une soupape pneumatique (6) pouvant se fermer et s'ouvrir ainsi qu'un système (8) pour la mesure et pour la mémorisation ainsi que pour l'affichage des données, pouvant être lues ou relevées de l'extérieur sous forme de diagrammes, en ce qui concerne la température et la pression régnant à l'intérieur de l'enceinte (1) fermée, et ceci pour une période d'activité d'au moins deux semaines.

2. Dispositif pour le transport et le stockage intermédiaire de mets cuits et de plats sur assiette cuits suivant la revendication 1, ***caractérisé en ce que*** le fond de l'enceinte est une seule plaque (10) de matière, sur la face inférieure de laquelle sont montées les roues (2, 3) et que la paroi arrière (17) et que les deux parois latérales (15, 16) qui s'y raccordent forment une pièce d'un seul tenant (13, 14), en forme d'U sur le dessin et qui est positionnée de manière étanche dans une rainure (18) du fond d'enceinte (10), cependant qu'un couvercle (12) d'enceinte s'ajuste, au moyen de fraisures pratiquées sur sa face inférieure, de façon inamovible sur les bords supérieurs des parois latérales (15, 16) et de la paroi arrière (17) et qu'il recouvre de manière étanche l'espace intérieur de la pièce en U (14), cependant que le fond (10) de l'enceinte, les parois latérales (5, 16, 17) et le couvercle (12) de l'enceinte portent sur les bords, orientés vers la face ouverte de l'enceinte (1), un joint de caoutchouc périphérique sans raccords, de sorte qu'en fermant la porte frontale (4, 5) on peut fermer l'enceinte (1) de manière étanche.

3. Dispositif pour le transport et le stockage intermédiaire de mets cuits et de plats sur assiette suivant une des revendications précédentes, ***caractérisé en ce que*** la paroi arrière verticale (17) et les parois latérales verticales (15, 16) de l'enceinte (1) sont constituées par une âme en une matière légère laminée.

4. Dispositif pour le transport et le stockage intermédiaire de mets cuits et de plats sur assiette suivant une des revendications précédentes, ***caractérisé en ce que*** la paroi arrière verticale (17) et les parois latérales verticales (15, 16) de l'enceinte (1) sont constituées d'un seul tenant par une âme en plastique mousse, recouverte des deux côtés par des plaques d'aluminium.

5. Dispositif pour le transport et le stockage intermédiaire de mets cuits et de plats sur assiette suivant une des revendications précédentes, ***caractérisé en ce que*** l'enceinte (1) est divisée verticalement en deux étages (48, 49), **en ce que** la paroi verticale arrière (17) et les parois latérales verticales (15, 16) sont interrompues par une plaque intermédiaire (11) constituée par une plaque de matière, sur les faces inférieure et supérieure de laquelle les parois sont positionnées dans les rainures (19) qui y sont fraisées.

6. Dispositif pour le transport et le stockage intermédiaire de mets cuits et de plats sur assiette suivant une des revendications 1 à 4, ***caractérisé en ce que*** l'enceinte (1) est divisée verticalement en trois étages, **en ce que** la paroi verticale arrière (17) et les parois latérales verticales (15, 16) sont interrompues par deux plaques intermédiaires (11) constituées par une plaque de matière, sur les faces inférieure et supérieure de laquelle les parois (15, 16, 17) sont positionnées dans les rainures (18, 19) qui y sont fraisées.

7. Dispositif pour le transport et le stockage intermédiaire de mets cuits et de plats sur assiette suivant une des revendications précédentes, ***caractérisé en ce que*** sur les bords de chacune des deux parois latérales (15, 16) orientés vers la porte frontale (4, 5) il est enfoncé de manière étanche un encadrement en U (43, 44), sur la face supérieure duquel une rainure (45, 46) est fraisée pour l'insertion d'un joint en caoutchouc, cependant qu'au moins l'un des encadrements profilés en U présente sur sa face extérieure, une fois qu'il est monté, un prolongement vers l'avant, destiné à la fermeture de la porte frontale (4, 5).

8. Dispositif pour le transport et le stockage intermédiaire de mets cuits et de plats sur assiette suivant une des revendications précédentes, ***caractérisé en ce que*** la plaque de fond (10) est réalisée par fraisage dans la matière pleine, **en ce qu'**elle présente sur la face supérieure une rainure fraisée (18), pour recevoir les parois latérales (15, 16) et la paroi arrière (17), ainsi que, sur la face avant, un évidemment fraisé d'en haut, de sorte qu'il est formé sur la face inférieure de la plaque de fond (10) un épaulement (20), jointif avec la face inférieure et s'étendant autour d'un coin avant de la plaque de fond (10), et un orifice (21) pour l'axe de charnière (32) de la porte frontale (10), cependant que la face frontale de la plaque de front (10), formée au-dessus de l'épaulement (20) présente une rainure fraisée (22) pour recevoir un joint de caoutchouc, cependant par ailleurs que la plaque de couvercle (12) est formée de façon inversement identique et que la plaque intermédiaire (11) d'un seul tenant présente la forme d'une plaque de couvercle imaginaire (12) et d'une plaque de fond (10) imaginaire ajustée dessus, tandis que l'épaulement de la plaque de couvercle imaginaire constitue en même temps celui de la plaque de fond imaginaire, cependant qu'au-dessus du même épaulement (23) vient s'appliquer la porte frontale supérieure (4) et qu'au-dessous de celui-ci vient s'appliquer la porte frontale inférieure (5).

9. Dispositif pour le transport et le stockage intermédiaire de mets cuits et de plats sur assiette suivant une des revendications précédentes, ***caractérisé en ce que*** les plaques de fond (10) et de couvercle (12) ainsi que - dans le cas d'une plaque intermédiaire (11) - celle-ci aussi sont réalisées dans la masse d'aluminium pleine.

10. Dispositif pour le transport et le stockage intermédiaire de mets cuits et de plats sur assiette suivant une des revendications précédentes, ***caractérisé en ce que**,* sur la plaque de couvercle (12), il est disposé un boîtier (8), comportant un afficheur (37) ainsi que des touches ou boutons de commande, ce boîtier contenant le système avec l'électronique pour la mesure et pour la mise en mémoire ainsi que pour l'affichage des données, pouvant être lues ou relevées de l'extérieur, en ce qui concerne la température et la pression à l'intérieur de l'enceinte fermée, et ceci pour une période d'activité d'au moins deux semaines.
